# EUROPÄISCHE PATENTSCHRIFT

(11) **EP 2 039 602 B1**
(45) Veröffentlichungstag und Bekanntmachung des Hinweises auf die Patenterteilung: **18.07.2012**
(21) Anmeldenummer: 08014573.3
(22) Anmeldetag: 16.08.2008
(51) Int. Cl.: B62M 9/10

(54) **Mehrfachkettenradeinheit für Fahrräder**
Multiple chain wheel unit for bicycles
Unité de roue à plusieurs chaînes pour vélos

(30) Priorität: 21.09.2007 DE 102007045424
(43) Veröffentlichungstag der Anmeldung: 25.03.2009
(73) Patentinhaber: SRAM Deutschland GmbH, 97424 Schweinfurt (DE)
(72) Erfinder: Braedt, Henrik, Dipl.-Ing., 97076 Würzburg (DE)

(56) Entgegenhaltungen:
- EP-A- 0 945 335
- EP-A- 1 238 903
- EP-A- 1 832 503
- US-B1- 6 340 338

## Beschreibung

Die Erfindung betrifft eine Mehrfachkettenradeinheit für Fahrräder und besteht gemäß dem Oberbegriff des Hauptanspruches aus mindestens zwei Kettenrädern, die mindestens einen gemeinsamen Hochschalt-Übergangsbereich aufweisen.

Mit einer Kettenschaltung ausgerüstete Fahrräder verfügen über mindestens ein antreibendes Mehrfachkettenrad und eine angetriebene Mehrfachkettenradeinheit, die mit einer Laschenkette verbunden sind. Der Schaltvorgang von einem Ketterad der Mehrfachkettenradeinheit zum nächsten erfolgt durch Einleitung einer axialen Schaltbewegung mittels einer Kettenumwerfeinrichtung. Um den Schaltvorgang von einem kleineren Kettenrad zum benachbarten größeren Kettenrad zu erleichtern, sind die Kettenräder im Kettenübergangsbereich mit besonders gestalteten Zähnen und Aufstiegshilfen ausgestattet. Eine besonders gute Schaltfunktion wird erreicht, wenn für den am Schaltvorgang beteiligten Kettenabschnitt ausreichend Raum geschaffen wird. Dies wird üblicherweise durch größere Zahnlücken und die Ausbildung entsprechender Vertiefungen an der dem kleineren Kettenrad zugewandten Seite des benachbarten größeren Kettenrades realisiert. Der Boden der Vertiefung bildet hierbei eine Anlagefläche für eine Kettenlasche des aufsteigenden Kettenabschnittes gemäß EP 642 972 B1. Eine weitere Verbesserung des Schaltvorganges vom kleineren zum größeren Kettenrad und umgekehrt wird in der EP 689 988 B1, insbesondere bei kleinen Zähnezahldifferenzen der benachbarten Kettenräder aufgezeigt. Hierzu ist zum einen der, der Zahnlücke vorlaufende Zahn mit einer Laschenauflauframpe und einer schrägen Einprägung an der Zahnspitze ausgestattet und zum anderen verfügen der erste und zweite auf die Zahnlücke folgende Zahn über unterschiedlich ausgerichtete Einprägungen bzw. Abschrägungen im Bereich der Zahnspitzen.

Um das ruckfreie Ablaufen der Kette durch die Zahnlücke zu verbessern, offenbart die obige Patentschrift eine Erhöhung des Zahngrundabschnittes vor dem der Zahnlücke folgenden Zahn, wodurch ein Kettenlängenausgleich erzielt wird. Die Erhöhung ist so bemessen, dass sich das Ein- und Ausschwenken der entsprechenden Kettenrolle nicht mehr vom Verhalten von Standardzähnen unterscheidet.

Ein mit diesen Merkmalen ausgestattete Mehrfachkettenradeinheit gewährleistet einen zuverlässigen Schaltvorgang auch bei Kettenrädern mit kleinen Zähnezahldifferenzen.

Die Anordnung mehrerer Zahnlücken bzw. Schaltgassen an den einzelnen Kettenrädern verkürzen die Wartezeit, bis die Kette nach Einleitung des Schaltvorganges den nächsten geeigneten Übergang zum benachbarten Kettenrad findet. Sind mehrere Schaltgassen bzw. Zahnlücken am Kettenrad angeordnet, so ist nicht immer gewährleistet, dass die Übergangszonen von einem zum anderen Kettenrad identisch sind. Wenn sich z. B. die Zähnezahl eines Ketterades (inklusive der in den Zahnlücken fehlenden Zähne) nicht durch den Zähnezahlunterschied zum benachbarten kleineren Kettenrad teilen lässt, kann bei zwei Schaltgassen am größeren Kettenrad zumindest eine nicht mit dem optimalen Versatz zum kleineren Ritzel positioniert werden. Definiert man den Versatz als den Abstand des Anlagepunktes der Kettenrolle am letzten Zahn des kleineren Kettenrades zum Anlagepunkt der Kettenrolle an dem der Zahnlücke folgenden Zahn des größeren Kettenrades, so gibt es einen optimalen Versatz, wenn die Kettenrolle am Zahn des größeren Kettenrades eine optimale Anlageposition (AP) einnimmt, wobei die nachfolgende Kettenrolle weder auf eine Zahnspitze des größeren Kettenrades aufreitet noch zu weit von der Lastflanke in das größere Kettenrad einschwenkt. Ein passender Versatz ermöglicht den besten Schaltvorgang und den Kettenübergang vom kleineren zum benachbarten größeren Kettenrad ruckfrei. Dabei liegt der am Übergang beteiligte Kettenabschnitt an drei Punkten auf. Eine Kettenrolle liegt noch am letzten Zahn des kleinen Kettenrades an, eine Kettenlasche stützt sich an der Laschenauflauframpe seitlich am größeren Kettenrad ab und eine weitere Kettenrolle berührt den auf die Zahnlücke folgenden Zahn des größeren Kettenrades an der Auflageposition (AP) an der lastfreien Zahnflanke. Liegt die Auflageposition gegenüber der optimalen AP zu hoch bzw. ist in Richtung Zahnspitze verschoben, so kommt es beim Schaltvorgang zu einem spürbaren Ruck, da die Kette mit zu großem Abstand der Kettenrolle zur Lastflanke in das größere Kettenrad einläuft. Dies erfolgt in dem Moment, wenn das kleine Kettenblatt die Kette freigibt und die noch nicht an der Lastflanke des entsprechenden Zahnes anliegende Kettenrolle den Abstand ruckartig ausgleicht bzw. auf die Lastflanke aufschlägt. Liegt die Auflageposition gegenüber der optimalen AP zu tief bzw. ist in Richtung Zahngrund verschoben, so verzögert sich der Schaltvorgang. Es erfolgt, besonders unter hoher Last, ein Aufreiten der Kette, da die Kettenrollen so weit in Lastrichtung rutschen, dass sie nicht mehr einlaufen, sondern an den Zahnspitzen aufliegen. Im Moment, wenn das kleine Ritzel die Kette freigibt, schnappt die Kette unter starkem Ruck in die Zwischenräume am großen Kettenrad bzw. schlägt die entsprechenden Kettenrollen auf die Lastflanken auf. Dies ist äußerst störend und führt zu Überbelastungen und erhöhtem Verschleiß an den entsprechenden Komponenten des Antriebsstranges und wird allgemein vermieden.

US 6 340 338 B1 offenbart eine Mehrfachkettenradeinheit gemäß des Oberbegriffs des Anspruchs 1.

Der vorliegenden Erfindung liegt die Aufgabe zugrunde, eine weitere Erleichterung des Schaltvorganges an einer Mehrfachkettenradeinheit und eine Verbesserung des Kettenüberganges zu schaffen, besonders dann, wenn sich die Zähnezahl eines größeren Ketterades (inklusive der in den Zahnlücken fehlenden Zähne) nicht durch den Zähnezahlunterschied zum benachbarten kleineren Kettenrad teilen lässt. Insbesondere soll erreicht werden, dass dann wenn an den Kettenrädern mehrere Schaltgassen in Form von Zahnlücken angeordnet sind, alle Schaltvorgänge zum größeren Kettenrad optimiert werden, auch wenn der tatsächliche Kettenversatz nicht an allen Übergängen identisch ist. Dabei soll der Schaltvorgang geräuscharm, sicher und stoßfrei erfolgen.

Die Lösung der Aufgabe ist im kennzeichnenden Teil des Hauptanspruches beschrieben. Ausgestaltungen sind den Unteransprüchen zu entnehmen.

Die erfinderische Lösung geht von der Bedingung aus, dass bei einem stoßfreien Schaltvorgang an einer Mehrfachkettenradeinheit die entsprechende Kettenrolle an der optimalen Auflageposition (AP) an der lastfreien Flanke des auf die Zahnlücke folgenden Zahnes anliegt. Dabei nehmen die am Schaltvorgang beteiligten Kettenglieder des Kettenübergangsabschnittes an der Auflauframpe einen definierten Abknickwinkel α ein. Ein nicht idealer Versatz bzw. zu kurzer Abstand der beiden Rollenauflagepunkte am kleinen und großen Kettenrad lässt sich korrigieren, wenn der Abknickwinkel am Kettenübergangsabschnitt vergrößert wird und dann den Abknickwinkel β einnimmt. Erfindungsgemäß wird dies durch eine Verschiebung des Auflagepunktes der Kettenlasche an der Laschenauflauframpe bewerkstelligt. Der Auflagewinkel wird zum einen größer, wenn sich der Abstand des Auflagepunktes zur Drehachse des Kettenrades verkleinert und zum anderen kleiner, wenn sich der Abstand vergrößert. Eine radiale Verschiebung des Auflagepunktes kann durch verschiedene Maßnahmen bewerkstelligt werden:
- Durch ein radiales Verschieben der Laschenauflauframpe relativ zu einer Referenzrampe an einem weiteren Kettenübergangsbereich dieses Kettenrades.
- Durch eine kleine Schwenkung der Laschenauflauframpe um die Drehachse des Kettenrades relativ zu einer Referenzrampe an einem weiteren Kettenübergangsbereich.
- Durch die Gestaltung eines flacheren oder steileren Verlaufes der Rampenkontur relativ zu einer Referenzrampe an einem weiteren Kettenübergangsbereich.
- Oder durch das Anbringen einer axial verlaufenden Ausnehmung, am Zahngrund der Zahnlücke im Bereich der angrenzenden Lastflanke.

Wird durch eine radiale Verschiebung der Auflagepunkt der Außenlasche an der Laschenauflauframpe herabsetzt, so führt dies zu einer Streckung des Kettenübergangsabschnittes und einer Veränderung des Auflagepunktes der Kettenrolle an der lastfreien Flanke des größeren Kettenrades. Mit der Abstandsvergrößerung der Rollenauflagepunkte wird somit eine optimale Auflageposition AP an der lastfreien Flanke des auf die Zahnlücke folgenden Zahnes am größeren Kettenrad erzielt. Durch diese Maßnahmen, z. B. eine Ausnehmung am Zahngrund des Kettenübergangsbereiches nahe der Lastflanke des größeren Kettenrades, wird der nicht identische Versatz bei Kettenrädern mit mehreren Schaltgassen bzw. Kettenübergangsbereichen korrigiert und ausgeglichen.

Die Erfindung wird Anhand mehrerer Zeichnungen erläutert. Es zeigen:
- Fig. 1: einen Kettenumlegevorgang an zwei Kettenzahnräder einer Mehrfachkettenradeinheit mit zwei unterschiedlichen Kettenübergangsbereichen und den entsprechenden Kettenübergangsabschnitten mit unterschiedlichen Laschenabknickwinkeln
- Fig. 2: ein Kettenzahnradpaar einer Mehrfachkettenradeinheit mit unterschiedlichen Kettenübergangsbereichen und Ausnehmungen an zwei Zahnlücken
- Fig. 3: 3 einen Kettenradausschnitt mit einer Laschenauflauframpe und einer Zahnlücke mit einer Ausnehmung im Bereich der Lastflanke
- Fig. 4 eine 3-D: Ansicht eines Ausschnittes einer Mehrfachkettenradeinheit mit Laschenauflauframpen und Ausnehmungen an den Zahnlücken

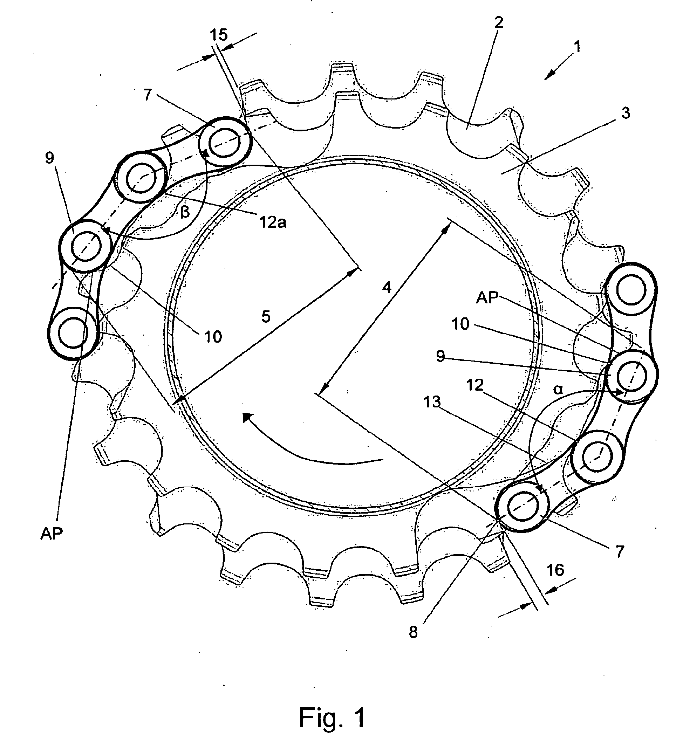

Figur 1 zeigt einen Kettenumlegevorgang an zwei Kettenzahnrädern einer Mehrfachkettenradeinheit 1 mit einem größeren Kettenrad 2 und einem kleineren Kettenrad 3 und einem ersten Kettenübergangsabschnitt 4 sowie einem zweiten Kettenübergangsabschnitt 5. Der erste Kettenübergangsabschnitt 4 am ersten Kettenübergangsbereich liegt mit einer ersten Kettenrolle 7 an der Lastflanke 8 des kleineren Kettenrades 3 und mit einer zweiten Kettenrolle 9 an der lastfreien Flanke 10 des größeren Kettenrades 2 an. Die Außenlasche liegt am Auflagepunkt 12 der Laschenauflauframpe 13 des größeren Kettenrades 2 auf. Der Kettenübergangsabschnitt 4 wird im Bereich des Auflagepunktes 12 abgeknickt und es stellt sich der Abknickwinkel α ein. Der Kettenumlegevorgang erfolgt hier bei idealem Versatz des größeren und kleineren Kettenrades 2 und 3. Das bedeutet, dass die Kettenrolle 10 an der für einen guten Schaltvorgang erforderlichen optimalen Auflageposition AP an der lastfreien Flanke 10 anliegt. Dieser ideale Versatz ist für den Kettenübergangsabschnitt 5 am zweiten Kettenübergangsbereich nicht gegeben. Dies erkennt man an dem Unterschied des ersten 15 und zweiten Abstandes 16 der benachbarten Zahnspitzen. Es ergibt sich ein längerer zweiter Kettenübergangsbereich für den zweiten Kettenübergangsabschnitt 5, und die entsprechende Kettenrolle 9 würde nicht auf die, für einen guten Schaltvorgang erforderliche Auflageposition AP an der lastfreien Flanke 10 aufliegen. Damit auch an diesem zweiten Kettenübergangsbereich die optimale Auflageposition AP erreicht wird, muss der Kettenübergangsabschnitt 5 gestreckt werden. Dies erfolgt durch eine radiale Verschiebung des Auflagepunktes 12a in Richtung der Kettenraddrehachse. Somit stellt sich ein anderer Abknickwinkel β ein, der etwas größer ist als α. Mit der Korrektur bzw. der radialen Verschiebung des Auflagepunktes 12a kann folglich die wirksame Länge des zweiten Kettenübergangsabschnittes 5 an den ursprünglich ungünstigeren Versatz am zweiten Kettenübergangsbereich 14 angepasst werden. Somit unterscheidet sich die wirksame Länge des zweiten Kettenübergangsabschnittes 5 vom ersten Kettenübergangsabschnitt 4.

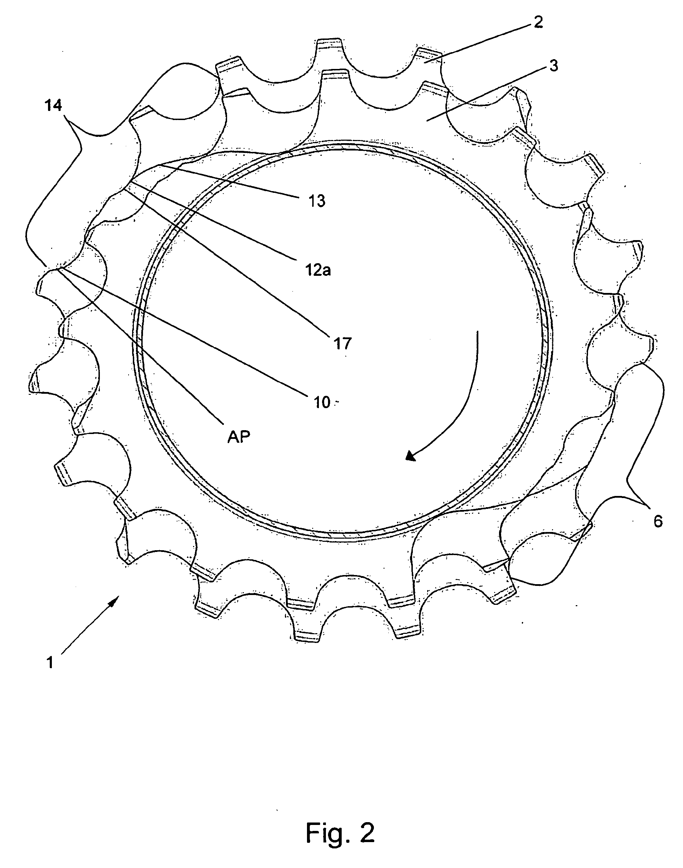

Figur 2 zeigt ein Kettenzahnradpaar einer Mehrfachkettenradeinheit 1 mit jeweils unterschiedlichen Kettenübergangsbereichen 6 und 14 sowohl am größeren Kettenrad 2 als auch am benachbarten kleineren Kettenrad 3. Die Konstellation dieser Kettenräder 2 und 3 erfüllt die Bedingung, dass die Zähnezahl inklusive der eventuell in den Zahnlücken fehlenden Zähne des größeren Kettenrades 2, nicht ganzzahlig durch die Differenz der Zähnezahlen des großen Kettenrades 2 und kleinen, benachbarten Kettenrades 3 teilbar ist. Das bedeutet, dass der vorhandene Versatz nur für eine der zwei Kettenübergangsbereiche 6 und 14 einen stoßfreien Schaltvorgang erlaubt. Zur Erzielung einer optimalen Auflageposition AP einer Kettenrolle an der lastfreien Flanke 10 am zweiten Kettenübergangsbereich 14 wird der Auflagepunkt 12a an der Laschenauflauframpe 13 durch eine durchgängige, radial verlaufende Ausnehmung 17 in Richtung Kettenradachse verschoben. Diese Korrektur bewirkt eine Streckung des Kettenübergangsabschnittes und eine Anlage der entsprechenden Kettenrolle an der optimalen Auflageposition AP, wie sie bereits am Kettenübergangsbereich 6 ohne eine Maßnahme wie die z. B. eine Ausnehmung 17 zur Verschiebung des Auflagepunktes an der Laschenauflauframpe 13 am Kettenübergangsbereich 6 erfolgt.

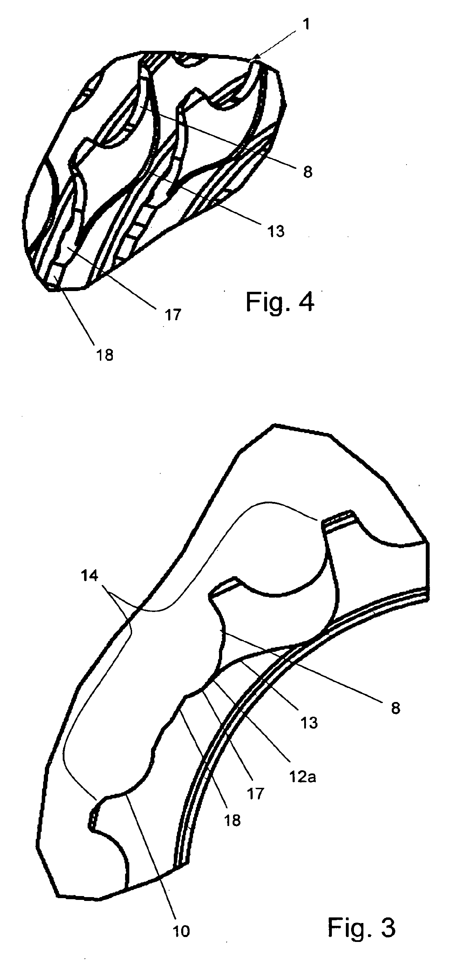

In Figur 3 wird ein vergrößerter Kettenradausschnitt mit einer Laschenauflauframpe 13 und einem Kettenübergangsbereich 14 in Form einer Zahnlücke gezeigt. Die Zahnlücke befindet sich zwischen der lastfreien Flanke 10 und einer Lastflanke 8. Am Zahngrund 18 des Kettenübergangsbereiches 14 ist eine durchgängige, radial verlaufende Ausnehmung 17 im Bereich der Lastflanke 8 angeordnet. Durch die Ausnehmung 17 wird der Auflagepunkt 12a für die entsprechende Kettenlasche in Richtung Kettenradachse verschoben und damit die Schaltbedingung verbessert.

Figur 4 zeigt eine 3-D Ansicht eines vergrößerten Ausschnittes einer Mehrfachkettenradeinheit 1 mit mehreren Kettenrädern. Am vorderen Kettenrad befindet sich ein Kettenübergangsbereich in Form einer Zahnlücke und einer axial verlaufenden Ausnehmung 17. Diese Ausnehmung 17 im Bereich der Lastflanke 8 verläuft tiefer als der Zahngrund 18 und verschiebt den wirksamen Auflagepunkt für die Außenlasche an der Laschenauflauframpe 13 radial in Richtung Kettenradachse.

### Bezugszeichenliste

- 1: Mehrfachkettenradeinheit
- 2: größeres Kettenrad
- 3: kleineres Kettenrad
- 4: erster Kettenübergangsabschnitt
- 5: zweiter Kettenübergangsabschnitt
- 6: erster Kettenübergangsbereich
- 7: erste Kettenrolle
- 8: Lastflanke
- 9: zweite Kettenrolle
- 10: lastfreie Flanke
- 12: und 12a Auflagepunkt
- 13: Laschenauflauframpe
- 14: zweiter Kettenübergangsbereich
- 15: erster Abstand
- 16: zweiter Abstand
- 17: Ausnehmung
- 18: Zahngrund
- AP: Auflageposition
- α: kleiner Abknickwinkel
- β: großer Abknickwinkel

## Patentansprüche

1. Mehrfachkettenradeinheit (1) für Fahrräder mit mindestens einem größeren (2) und einem kleineren Kettenrad (3), wobei beim Umlegen der Kette durch eine Umlegeeinrichtung an verschiedenen Kettenübergangsbereichen (6,14) von einem kleineren (3) auf ein größeren Kettenrad (2) ein Kettenübergangsabschnitt (4) der Kette mit einer Kettenrolle (7) an einer Lastflanke (8) des kleineren (3) und einer weiteren Kettenrolle (9) an einer lastfreien Flanke (10) des benachbarten größeren Kettenrades (3) anliegt und eine Außenlasche (11) an einem Auflagepunkt (12) auf der Laschenauflauframpe (13) am größeren Kettenrad (2) aufliegt und dort der Kettenübergangsabschnitt (4) abknickt und sich ein Abknickwinkel α bildet,
**dadurch gekennzeichnet,**
**dass** die radialen Positionen der Auflagepunkte (12) an dem verschiedenen Kettenübergangsbereichen (6, 14) eines größeren Kettenrades (2) unterschiedlich sind, wodurch sich in Abhängigkeit von der radialen Position des Auflagepunktes (12) unterschiedliche Winkel (α, β) zwischen den abgeknickten Kettengliedern an den Kettenübergangsabschnitten (4, 5) ergeben und sich somit optimale Auflagepositionen AP der Kettenrollen (9) an den lastfreien Flanken (10) an allen Kettenübergangsbereichen (6, 14) des größeren Kettenrades (2) erzielen lassen.

2. Mehrfachkettenradeinheit (1) nach Anspruch 1,
**dadurch gekennzeichnet,**
**dass** die radiale Position eines Auflagepunktes (12a) an einem Kettenübergangsbereich (14) von mehreren Kettenübergangsbereichen (6, 14) an einem Kettenrad (2) durch eine radiale Verschiebung der Laschenauflauframpe (13) im Vergleich zu einer Laschenauflauframpe (13) eines anderen Kettenübergangsbereiches (6) erzielt wird.

3. Mehrfachkettenradeinheit (1) nach Anspruch 1,
**dadurch gekennzeichnet,**
**dass** die radiale Position eines Auflagepunktes (12a) an einem Kettenübergangsbereich (14) von mehreren Kettenübergangsbereichen (6, 14) an einem Kettenrad (2) durch eine kleine Schwenkung der Laschenauflauframpe (13) um die Drehachse des Kettenrades (2) relativ zu einer Laschenauflauframpe (13) eines anderen Kettenübergangsbereiches (6) erzielt wird.

4. Mehrfachkettenradeinheit (1) nach Anspruch 1,
**dadurch gekennzeichnet,**
**dass** die radiale Position eines Auflagepunktes (12a) an einem Kettenübergangsbereich (14) von mehreren Kettenübergangsbereichen (6, 14) an einem Kettenrad (2) durch einen steileren oder flacheren Verlauf der Rampenkontur der Laschenauflauframpe (13) relativ zu einer Laschenauflauframpe (13) eines anderen Kettenübergangsbereiches (6) erzielt wird.

5. Mehrfachkettenradeinheit (1) nach Anspruch 1,
**dadurch gekennzeichnet,**
**dass** die radiale Position eines Auflagepunktes (12a) an einem Kettenübergangsbereich (14) von mehreren Kettenübergangsbereichen (6, 14) an einem Kettenrad (2) durch das Anbringen einer radial verlaufenden Ausnehmung (17) am Zahngrund (18) dieses Kettenübergangsbereiches (14) erzielt wird.

6. Mehrfachkettenradeinheit (1) nach den Ansprüchen 1 bis 5,
**dadurch gekennzeichnet,**
**dass** in mindestens einem der Kettenübergangsbereiche (6, 14) insbesondere am Kettenübergangsbereich (14) unter Bildung einer Zahnlücke ein Zahn ausgespart ist.

7. Mehrfachkettenradeinheit (1) nach den Ansprüchen 1 bis 5,
**dadurch gekennzeichnet,**
**dass** die einzelnen Kettenräder (2, 3) über Mitnahmeelemente zur Montage auf einem Zahnkranzträger verfügen.

8. Mehrfachkettenradeinheit (1) nach den Ansprüchen 1 bis 5,
**dadurch gekennzeichnet,**
**dass** die einzelnen Kettenräder (2, 3) an ihrer inneren Peripherie mit einem Mitnahmeprofil ausgestattet sind, zur Kopplung mit korrespondierenden Mitnahmeelementen an einem drehbar auf der Nabenachse angeordneten Antreiber.

9. Mehrfachkettenradeinheit (1) nach den Ansprüchen 1 bis 5,
**dadurch gekennzeichnet,**
**dass** die einzelnen Kettenräder (2, 3) einstückig mit der Tragstruktur eines drehbar gegenüber der Nabenachse angeordneten Ritzelkörpers angeordnet sind.

10. Mehrfachkettenradeinheit (1) nach den Ansprüchen 1 bis 5,
**dadurch gekennzeichnet,**
**dass** die Zähnezahl, inklusive der eventuell in den Zahnlücken fehlenden Zähne eines größeren Kettenrades (2), nicht ganzzahlig durch die Differenz der Zähnezahlen von mindestens einem großen Kettenrad (2) und einem kleinen benachbarten Kettenrad (3) teilbar ist.

11. Mehrfachkettenradeinheit (1) nach den Ansprüchen 1 bis 5,
**dadurch gekennzeichnet,**
**dass** die Kettenräder (2, 3) spanend hergestellte Teile sind.

## Claims

1. Multi-sprocket wheel unit (1) for bicycles, having at least one larger sprocket wheel (2) and one smaller sprocket wheel (3), wherein, as the chain is transferred by a transfer device in various chain crossover regions (6, 14) from a smaller sprocket wheel (3) to a larger sprocket wheel (2), a chain crossover segment (4) of the chain rests by means of a chain roller (7) against a load flank (8) of the smaller sprocket wheel (3) and by means of a further chain roller (9) against a load-free flank (10) of the adjacent, larger sprocket wheel (2), and an outer link plate (11) rests on a link run-on ramp (13) on the larger sprocket wheel (2) at a support point (12), and the chain crossover segment (4) bends there, forming a bending angle α, **characterized in that** the radial positions of the support points (12) in the various chain crossover regions (6, 14) of a larger sprocket wheel (2) are different, thereby producing different angles (α, β) between the bent chain links in the chain crossover segments (4, 5), depending on the radial position of the support point (12), and thus optimum support positions AP of the chain rollers (9) on the load-free flanks (10) can be achieved in all the chain crossover regions (6, 14) of the larger sprocket wheel (2).

2. Multi-sprocket wheel unit (1) according to Claim 1, **characterized in that** the radial position of a support point (12a) in one chain crossover region (14) of several chain crossover regions (6, 14) on a sprocket wheel (2) is achieved by a radial displacement of the link plate run-on ramp (13) in comparison with a link plate run-on ramp (13) of another chain crossover region (6).

3. Multi-sprocket wheel unit (1) according to Claim 1, **characterized in that** the radial position of a support point (12a) in one chain crossover region (14) of several chain crossover regions (6, 14) on a sprocket wheel (2) is achieved by slight pivoting of the link plate run-on ramp (13) about the axis of rotation of the sprocket wheel (2) relative to a link plate run-on ramp (13) of another chain crossover region (6).

4. Multi-sprocket wheel unit (1) according to Claim 1, **characterized in that** the radial position of a support point (12a) in one chain crossover region (14) of several chain crossover regions (6, 14) on a sprocket wheel (2) is achieved by means of a steeper or shallower slope of the ramp contour of the link plate run-on ramp (13) relative to a link plate run-on ramp (13) of another chain crossover region (6).

5. Multi-sprocket wheel unit (1) according to Claim 1, **characterized in that** the radial position of a support point (12a) in one chain crossover region (14) of several chain crossover regions (6, 14) on a sprocket wheel (2) is achieved by making a radially extending recess (17) at the tooth root (18) of this chain crossover region (14).

6. Multi-sprocket wheel unit (1) according to Claims 1 to 5, **characterized in that** a tooth is removed in at least one of the chain crossover regions (6, 14), in particular in chain crossover region (14), to form a tooth gap.

7. Multi-sprocket wheel unit (1) according to Claims 1 to 5, **characterized in that** the individual sprocket wheels (2, 3) have driving elements for mounting on a ring gear support.

8. Multi-sprocket wheel unit (1) according to Claims 1 to 5, **characterized in that** the individual sprocket wheels (2, 3) are provided on the inner periphery thereof with a driving profile for coupling with corresponding driving elements on a driver arranged rotatably on the hub axle.

9. Multi-sprocket wheel unit (1) according to Claims 1 to 5, **characterized in that** the individual sprocket wheels (2, 3) are arranged integrally with the supporting structure of a pinion body arranged so as to be rotatable relative to the hub axis.

10. Multi-sprocket wheel unit (1) according to Claims 1 to 5, **characterized in that** the number of teeth on a larger sprocket wheel (2), including those teeth which may be missing in the tooth gaps, cannot be divided to give a whole number by the difference between the number of teeth on at least one large sprocket wheel (2) and one adjacent small sprocket wheel (3).

11. Multi-sprocket wheel unit (1) according to Claims 1 to 5, **characterized in that** the sprocket wheels (2, 3) are parts produced by machining.

## Revendications

1. Unité de plateaux multiples (1) pour bicyclettes, comprenant au moins un plus grand plateau (2) et un plus petit plateau (3), dans laquelle, lors du passage de la chaîne par un dispositif de changement au niveau de différentes zones de transition de chaîne (6, 14), depuis un plus petit plateau (3) à un plus grand plateau (2), une portion de transition de chaîne (4) de la chaîne s'applique avec un rouleau de chaîne (7) contre un flanc de charge (8) du plus petit plateau (3) et avec un autre rouleau de chaîne (9) contre un flanc sans charge (10) du plus grand plateau (2) adjacent, et un flasque extérieur (11) repose au niveau d'un point d'appui (12) sur la rampe de montée de flasque (13) sur le plus grand plateau (2), et la portion de transition de chaîne (4) est décalée à cet endroit et forme un angle de décalage α,
**caractérisée en ce que**
les positions radiales des points d'appui (12) au niveau des différentes zones de transition de chaîne (6, 14) d'un plus grand plateau (2) sont différentes, de sorte qu'en fonction de la position radiale du point d'appui (12), différents angles (α, β) soient obtenus entre les maillons de la chaîne décalés au niveau des portions de transition de chaîne (4, 5), et que des positions d'appui optimales AP des rouleaux de chaîne (9) sur les flancs sans charge (10) puissent être obtenues au niveau de toutes les zones de transition de chaîne (6, 14) du plus grand plateau (2).

2. Unité de plateaux multiples (1) selon la revendication 1,
**caractérisée en ce que**
la position radiale d'un point d'appui (12a) au niveau d'une zone de transition de chaîne (14) parmi plusieurs zones de transition de chaîne (6, 14) sur un plateau (2) est obtenue par un déplacement radial de la rampe de montée de flasque (13) par comparaison avec une rampe de montée de flasque (13) d'une autre zone de transition de chaîne (6).

3. Unité de plateaux multiples (1) selon la revendication 1,
**caractérisée en ce que**
la position radiale d'un point d'appui (12a) au niveau d'une zone de transition de chaîne (14) parmi plusieurs zones de transition de chaîne (6, 14) sur un plateau (2) est obtenue par un petit pivotement de la rampe de montée de flasque (13) autour de l'axe de rotation du plateau (2) par rapport à une rampe de montée de flasque (13) d'une autre zone de transition de chaîne (6).

4. Unité de plateaux multiples (1) selon la revendication 1,
**caractérisée en ce que**
la position radiale d'un point d'appui (12a) au niveau d'une zone de transition de chaîne (14) parmi plusieurs zones de transition de chaîne (6, 14) sur un plateau (2) est obtenue par une allure plus raide ou plus plate du contour de rampe de la rampe de montée de flasque (13) par rapport à une rampe de montée de flasque (13) d'une autre zone de transition de chaîne (6).

5. Unité de plateaux multiples (1) selon la revendication 1,
**caractérisée en ce que**
la position radiale d'un point d'appui (12a) au niveau d'une zone de transition de chaîne (14) parmi plusieurs zones de transition de chaîne (6, 14) sur un plateau (2) est obtenue par la réalisation d'un évidement (17) s'étendant radialement au niveau de la base de dent (18) de cette zone de transition de chaîne (14).

6. Unité de plateaux multiples (1) selon les revendications 1 à 5,
**caractérisée en ce que**
dans au moins l'une des zones de transition de chaîne (6, 14), en particulier au niveau de la zone de transition de chaîne (14), une dent est omise en formant un espace entre dents.

7. Unité de plateaux multiples (1) selon les revendications 1 à 5,
**caractérisée en ce que**
les plateaux individuels (2, 3) disposent d'éléments d'entraînement pour le montage sur un support de couronne dentée.

8. Unité de plateaux multiples (1) selon les revendications 1 à 5,
**caractérisée en ce que**
les plateaux individuels (2, 3) sont munis à leur périphérie interne d'un profil d'entraînement pour l'accouplement avec des éléments d'entraînement correspondants sur un actionneur disposé de manière rotative sur l'axe de moyeu.

9. Unité de plateaux multiples (1) selon les revendications 1 à 5,
**caractérisée en ce que**
les plateaux individuels (2, 3) sont disposés d'une seule pièce avec la structure portante d'un corps de pignon disposé de manière rotative par rapport à l'axe de moyeu.

10. Unité de plateaux multiples (1) selon les revendications 1 à 5,
**caractérisée en ce que**
le nombre de dents, incluant les dents manquant éventuellement dans les espaces entre dents, d'un plus grand plateau (2) ne peut pas être divisé en un nombre entier par la différence des nombres de dents d'au moins un grand plateau (2) et d'un petit plateau adjacent (3).

11. Unité de plateaux multiples (1) selon les revendications 1 à 5,
**caractérisée en ce que**
les plateaux (2, 3) sont des pièces fabriquées par usinage par enlèvement de copeaux.
